# EUROPEAN PATENT SPECIFICATION

(11) **EP 3 520 353 B1**
(45) Date of publication and mention of the grant of the patent: **30.04.2025**
(21) Application number: 17777888.3
(22) Date of filing: 29.09.2017
(51) Int. Cl.: H04L 65/80, H04L 65/611, H04L 1/1867

(54) **PLAYOUT BUFFERING IN A LIVE CONTENT DISTRIBUTION SYSTEM**
AUSSPIELPUFFERUNG IN EINEM LIVE-INHALTSVERTEILUNGSSYSTEM
MISE EN MÉMOIRE TAMPON DE LECTURE DANS UN SYSTÈME DE DISTRIBUTION DE CONTENU EN DIRECT

(30) Priority: 30.09.2016 SE 1651289
(43) Date of publication of application: 07.08.2019
(73) Proprietor: Amazon Technologies, Inc., Seattle, WA 98109 (US)
(72) Inventor: BOHM, Christer, 131 46 Nacka (SE); LINDGREN, Per, 645 93 Strängnäs (SE); CEDRONIUS, Anders, 125 56 Älvsjö (SE); OLSSON, Ted, 113 40 Stockholm (SE)
(74) Representative: Cabinet Beau de Loménie
(86) International application number: PCT/EP2017/074816
(87) International publication number: WO 2018/060449

(56) References cited:
- WO-A1-2004/030266
- WO-A2-2008/033645
- US-B2- 8 031 701

## Description

### TECHNICAL FIELD

The present invention relates to the field of communication network systems for node-to-node transmission of data, and more particularly to a method for playout buffering and retransmission in a distribution system for live content over the Internet.

### BACKGROUND OF THE INVENTION

For Over-The-Top (OTT) distribution and Video-On-Demand (VOD) systems, normally one server streams a video stream to a large number of clients. This means that the server needs to hold a per client portion of data to handle retransmission in the case that data is lost in the communication between the server and the client. This is true whether the distribution and retransmission is handled by using TCP, or using UDP with an application layer retransmission technology. A problem connected to this is that buffering of the per client portion of data to handle retransmission scales with the number of clients served.

In a server, the performance is to a high extent affected by how large memory bandwidth the server central processor unit (CPU) can achieve towards the memory system. The memory system in a server consists of a primary memory and disk, where the primary memory is smaller and faster. To achieve higher performance smaller memories may be utilized, which are even faster than the primary memory, and which are located closer to the CPU. These memories are called cache. In addition, the cache can also be organized in levels, Level 1 cache (small and very fast access), Level 2 cache (bigger and slower than the Level 1 cache), etc. Each cache memory is normally divided into an instruction cache (holding the "program") and a data cache (holding the data being processed). So if a program and its corresponding data is in the cache the execution will be magnitudes faster than when executed on e.g. the disk.

For distribution of media content in the case of OTT and VOD, the distributed data is associated with each client device it is being sent to, and this type of distribution thus consumes a large amount of data making it likely to be stored/processed in a lower level of the memory hierarchy, i.e., Level 2 cache or primary memory.

Also, when data is stored per client, incoming data that is to be sent to many clients needs to be copied to each client. Copying data many times also slows down the performance of the server.

Data forwarding from one input interface board to an outgoing does not mean that the data needs to be copied. Data that is not processed is direct memory accessed (DMA'ed) to the memory while header information which is processed enters the data cache. It is therefore in the interest of the implementation to avoid processing as much data as possible to avoid copying and that the cache becomes "full".

Document WO 2008/033645 A2 proposes a hybrid packet repair scheme. This document relates to a media server sending packets to receivers, and a retransmission server copying the media packets and retransmitting them in case of dropped packets. The retransmission server uses the hybrid packet repair scheme to send different types of unicast retransmission packets, multicast retransmission packets and/or FEC packets depending on the population of receivers and the nature of the error prompting the repair operation.

Document WO 2004/030266A1 teaches a system in which ARQ is performed at different layers. The ARQ does not need to correct all the errors, but only up to a reliability threshold required by the higher layer.

Document US 8 031 701 B2 is also known. This document proposes a retransmission-based stream repair and join scheme. In this document, a retransmission system caches multicast packets from a media source and retransmits these packets when receiving packet retransmission requests. A unicast repair scheme based on the Real-Time Transport Protocol (RTP) is used to repair errors in the multicast streams. By modeling the joining of a new media stream as a repair operation, the repair scheme is extended to the joining of media channels.

### SUMMARY OF THE INVENTION

It would be advantageous to provide an at least improved and reliable method for playout buffering and retransmission which can handle OTT and VOD distribution to a large number of client devices, which method consumes less resources than the prior art solutions. This object is achieved by a method according to the present inventive concept as defined in claim 1.

Thus, in a first aspect of the present inventive concept, defined by independent claim 1, there is provided a method for transmitting a data stream from a server to at least two client devices comprising for at least one outgoing data stream: transmitting the data stream to the at least two client devices, and buffering a predetermined portion of the data stream in a shared buffer. Upon receiving per client requests for retransmission of data from the at least two client devices, retransmitting requested data from the shared buffer. The inventive concept is applicable in distribution of e.g. media data as in typical OTT and VOD, which is transported over unicast. Optionally, media data is distributed over multicast but with per client requests for retransmissions. For a server serving a number of client devices with the same TV-channel, in contrast to the prior art operation with TCP which provides buffering for retransmission per client, according to the present inventive concept the outgoing data stream is buffered once in a shared buffer for the many client device data streams, and the same buffered data is then utilized to serve retransmission for all client devices.

According to the invention, the method further comprises removing buffered data from the shared buffer based on if the time of interest for the buffered data has passed. This may be indicated with a timer or by utilizing time stamps distributed in the data stream to indicate if the time of interest of buffered data has passed. Buffered data is kept a predetermined time (indicating that data is too old to be valid anymore), particularly in the case of video where the time of displaying the data stream has passed, or until it is likely that all devices have received the data, i.e. when no requests for retransmission of lost packets are detected within the time of interest. This manner the clients do not have to send an ACK to acknowledge that they have received the data. Instead a timer indicating that the time of interest for the data has passed is utilized. The timer based solution significantly reduces the upstream traffic from the devices to the server since messages are only sent upstream in case of lost data downstream.

According to an embodiment of the method, it further comprises prior to the step of buffering identifying client device shared data of the data stream. By identifying client shared data in the data packets of the outgoing data stream at least candidate data for being buffered in the shared buffer is identified. The client device shared data will comprise payload data, e.g. the media content of the TV-channel, but may also include client shared header data, timestamps, subtitles, application data like tweets or social interactive data, etc.

According to an embodiment of the method, the step of buffering is performed on payload data of the data stream (and/or header data that is common for the clients). In applications where FEC or any other payload data application is used, the whole data packet will be processed and will therefore enter the processors cache memory. However, when the payload is not processed, the payload can remain in the primary memory or some lower level cache memory but the header information which needs to be processed will therefore enter the cache.

According to an embodiment of the method, per client header information is processed only once for each client, and processed per client data is buffered in said shared buffer. When sending a packet the header is constructed and it is possible to point to the shared buffer of payload data. The header will be unique for each destination but the payload data is the same. The shared buffer of the payload data can be in the cache or the primary memory. In each way it is automatically transferred to the interface card when send instruction is being issued. In the present inventive concept the payload data is stored once and is used for all clients thereby saving primary memory, avoiding copying and potential cache misses. This allows for the server to handle a significantly larger number of client network interfaces.

According to an embodiment of the method, the outgoing data stream is transported over unicast or over multicast with individual client requests for retransmissions which is advantageous. In the shared buffer the data is stored with a, for all clients, common sequence number. So when a client requests a retransmission the server finds the payload data using the sequence number. The method with one shared buffer for several client devices can thus be used both for unicast and multicast applications.

According to the claimed method, when the method is concerned with multicast distribution of video, i.e. video distribution using multicast, the step of retransmitting is performed as unicast or multicast transmission. For multicast distribution of video, it is an option to send retransmissions as unicast or multicast. This choice can depend on several aspects.

According to the claimed method, unicast or multicast transmission is selected based on if there is a network installation or subnetwork (for example a stadium installation with native layer 1 or layer 2 (L1/L2) multicast. The retransmission of a packet has the same cost if it is uni- or multicast meaning that if the data is requested more than once, multicast is beneficial.

According to an embodiment of the method, if the multicast transmission uses L1/L2 multicast in at least one subnetwork but not between subnetworks, multicast transmission is selected. It might be beneficial to use multicast if the requests for retransmission from clients are in the same subnetwork but if it is different subnetworks not.

According to an embodiment of the method, if a predetermined threshold number of request are received from a multiple of client devices, multicast transmission is selected. If a large number of requests are issued it is beneficial to select multicast transmission of the retransmission.

According to an embodiment of the method, payload data is buffered in a dedicated memory instead of a cache or a primary memory of the server. This is advantageous if a payload data application is utilized, e.g. FEC, which in a similar manner as when performing checksum calculations on the packets, this is performed on the whole payload and on the network interface card.

According to an embodiment of the method, further comprising constructing packets comprising requested data from the shared buffer and per client (individual client) information selected from a list of header unique destination data.

According to an embodiment of the method, removing buffered data may be performed based on received acknowledge from all client devices.

According to a second aspect of the inventive concept, defined by independent claim 10, there is provided a node in a communication network comprising a memory storing computer-readable instructions, and a processor, wherein when the instructions are executed by the processor, cause the processor to perform the method of the first aspect. It may further comprise means for transmitting the outgoing data stream, e.g. a transmitter. Further, according to a third aspect of the inventive concept, defined by independent claim 12, there is provided a non-transitory computer readable storage medium storing computer-readable instructions, wherein when the instructions are executed by a processor, cause the processor to perform the method presented herein.

Embodiments of the present inventive method are preferably implemented in a distribution, media content provider, or communication system by means of software modules for signaling and providing data transport in form of software, a Field-Programmable Gate Array (FPGA), an Application Specific Integrated Circuit (ASIC) or other suitable device or programmable unit, adapted to perform the method of the present invention, an implementation in a cloud service or virtualized machine (not shown in diagrams). The software module and/or data-transport module may be integrated in a node comprising suitable processing means and memory means, or may be implemented in an external device comprising suitable processing means and memory means, and which is arranged for interconnection with an existing node. The node is preferably arranged at an edge node, e.g. in communication with a streaming edge server, or is integrated in/or constitutes a streaming edge server.

Further objectives of, features of, and advantages with, the present invention will become apparent when studying the following detailed disclosure, the drawings and the appended claims.

The scope of the invention is defined by the appended claims.

### BRIEF DESCRIPTION OF THE DRAWINGS

The above will be better understood through the following illustrative and non-limiting detailed description of preferred embodiments of the present invention, with reference to the appended drawings, where the same reference numerals will be used for similar elements, and wherein:
Fig. 1 is a schematic block diagram illustrating a server-client communication system in which embodiments of a method and node according to the present inventive concept is employed;
Figs. 2a - 2c are schematic flow charts illustrating embodiments of a method according to the present inventive concept; and
Figs. 3 to 6 are schematic block diagrams illustrating a server-client communication system in which embodiments of a method according to the present inventive concept is employed.

All the figures are schematic, not necessarily to scale, and generally only show parts which are necessary in order to elucidate the invention, wherein other parts may be omitted or merely suggested.

### DETAILED DESCRIPTION OF PREFERRED EMBODIMENTS

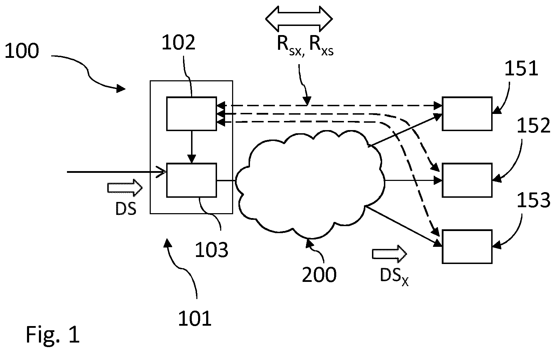

Referring now to Fig. 1, which is a block diagram schematically illustrating a communication network system 100 of e.g. IP type for live distribution of media content, in view of which aspects of the present inventive concept will be described. A server 101 (which may be a streaming edge server, or playout server, receiving data from an ingress server (not shown) of a distribution system (not shown), is arranged for providing media content to one or more recipients or client devices 151, 152, 153. The media content is sent as a data stream DS using unicast or multicast via respective communication links over a network 200, and is typically provided as a stream of contiguous packets, which may have different size, and may represent different types of packets with some header or trailer portion identifying the type.

In the distribution network system data transmission of the data stream DS from the ingress device to the client devices 151, 152, 153 may involve transmitting e.g. video content or other media content in the form of video packets (multi cast video packets), and e.g. audio packets. The data stream DS is received at the streaming edge server (playout server), here embodied by the server 101, from which the multiple client devices 151, 152, 153 located at different viewer locations request media content to display. The media content is distributed to the client devices 151, 152, 153 in separate data streams DSi, DS2, and DS3 (illustrated as DSX in Fig. 1 ) over a respective communication link, which may be provided over a computer network (e.g. a LAN a WAN, the Internet), a wireless network (e.g. a cellular data network), or some combination of these network types (illustrated as the secondary network 200 in Fig. 1 ). Each client device 151, 152, 153 comprises means for processing received media content and to select media content to play. The primary distribution network and the secondary network 200 do not need to be dedicated networks but can be shared with other services.

The client devices 151, 152, 153, connecting to the server to request live media content may be e.g. different versions of smart phones, IP connectable TV-sets or computers from different manufacturers and thus have different prestanda with respect to clock speed/frequencies, tolerances etc. The client devices thus need to be synchronized to provide simultaneous playout, i.e. to provide a synchronized playout time, of the packets of their respective instances of the media stream DSX. The data stream for transmission DSX is represented as a sequence of data packets representing a contiguous stream of information, with each data packet comprising a set of payload information representative of a segment of the stream of information corresponding thereto.

In order to handle missing packets and other types of errors, communication and distribution systems employ various techniques to handle erroneously received information. The client devices may correct the erroneously received information amongst other techniques by retransmission techniques, which enable the erroneously received information to be retransmitted to the receiver, i.e. client device, for example, by using automatic retransmission request (ARQ) or forward error correction (FEC) techniques. FEC techniques include, for example, convolutional or block coding of the data prior to modulation. FEC coding involves representing a certain number of data bits or blocks of data using a certain (greater) number of code bits or code blocks, thereby adding redundancy which permits correction of certain errors.

If there are lost packets during data transmission, any client(s) experiencing missing packets will request retransmission (RT) of the lost packets from the server 101. In addition to retransmission if there is FEC information available, the clients can either attempt to recover lost packets by FEC correction and then by retransmission, or first by retransmission and then by FEC correction on the newly transmitted data.

According to an embodiment of the invention the distribution system further comprises a control device for handling retransmission of media content to the client devices, which may be embodied by a separate control server 102, either arranged separately from and in communication with the (streaming) server 101, or integrated in the server 101 as illustrated in Fig. 1. When integrated in the server 101, the control device 102 is preferably a software module and/or data-transport module. The server 101 (or the control device) further comprises a shared buffer 102 which may make part of the memory resources of the server, or may be a dedicated memory device.

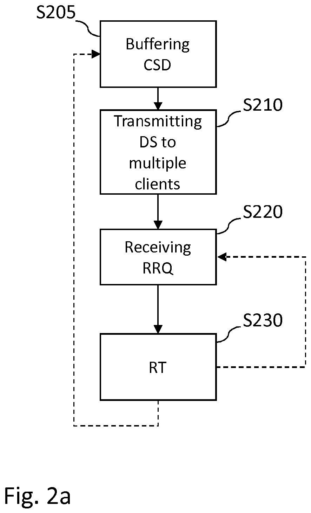

Embodiments of a method for transmitting a data stream from a server to at least two client devices which comprises providing packet loss recovery for transmission of a data stream DSX in a packet-based network according to the present inventive concept will now be described with reference to Figs. 2a - 2c, and the exemplifying distribution system as described above with reference to Fig. 1. For illustrative purposes, the data stream for transmission DSx is represented as a sequence of data packets of a contiguous stream of data, with each data packet comprising a set of payload information corresponding to one or more specific data types.

In Fig. 2a, in a step S205, a predetermined portion of client shared data (CSD) of a data stream DS to be transmitted from the server 101 to a plurality of client devices 151, 152, 153 which are connected to the server is buffered in the shared buffer 102. In an example a specific amount of payload data of the data stream is buffered in the shared buffer. The data stream DS is transmitted to the client devices (step S210). Client devices that experience data loss in the distribution may send requests for retransmission of lost packets (RRQ), which are received by the server (step S220). Finally, requested packets are retrieved from the shared buffer 102 and retransmitted RT to the client devices (step S230).

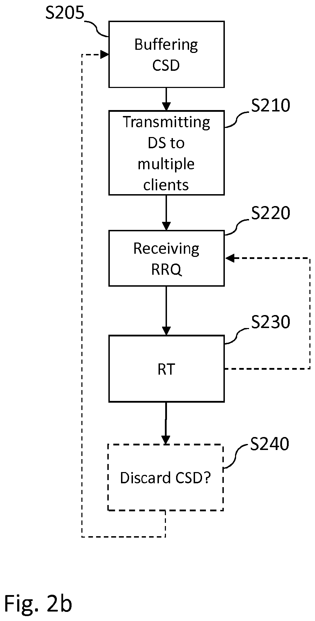

According to an embodiment of the method, see Fig. 2b, it further comprises discarding buffered data from the shared buffer based on received acknowledge from all client devices that a specific buffered data has been received by the client device, or based on a timer indicating that the time of interest for the buffered data has passed (step S240) thus avoiding sending acknowledgements consuming upstream communication capacity.

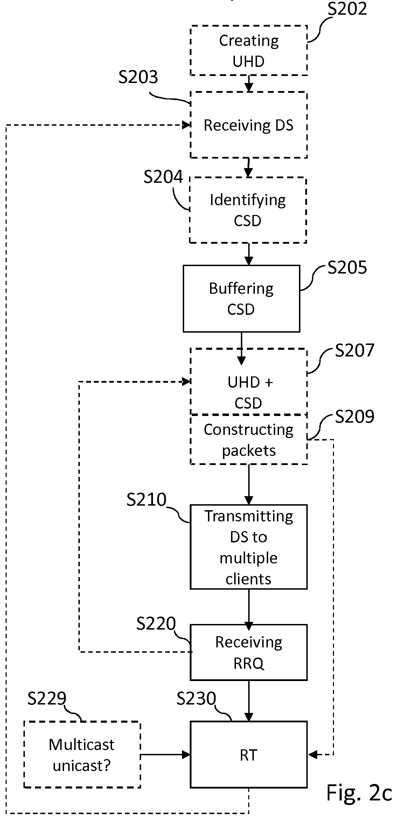

According to an embodiments of the method, as illustrated in Fig. 2c, before transmission of the data stream DS to client devices, a list of unique header data (UHD) for each client device may be created (step S202) and buffered in the shared buffer or in other memory of the server 101. Preferably, the UHD for each client device is constructed as a new device is connected to the server. As previously mentioned, the server 101 may be a streaming edge server, or playout server, receiving data from an ingress server (not shown) of a distribution system. As an incoming data stream DS containing client shared data (CDS) is received at the server 101 (step S203), the received data stream is analyzed and (predetermined) client shared data (CSD) is identified (step S204). The client shared data CSD, e.g. payload containing media content to be displayed is subsequently buffered in the shared buffer (step S205). Optionally a list of shared header data (SHD) for all client device is identified and created in step S204, which SHD may be buffered in the shared buffer (step S205). Packets to be transmitted in the data stream DS are constructed from respective unique header data UHD and client shared data CSD retrieved from the shared buffer (steps S207 and S209) and transmitted to the client devices (step S210). As the server receives requests for retransmissions RRQ, step S220, requested client shared data and UHD corresponding to the client device that made the RRQ are retrieved from the shared buffer and the list of UHD (step S207) from which data packets for retransmission of lost data are constructed (step S209, and subsequently retransmitted to the client devices, step S230).

The method steps of the present method as illustrated in Figs. 2a - 2c may be combined, or conditionally excluded and are not necessarily presented in a required order as is schematically illustrated by the dashed boxes and arrows in the Figs.

The outgoing data stream (step S220) may be transmitted using unicast or multicast with per client requests for retransmissions. When using multicast distribution of the outgoing data stream DS (step 220), e.g. video, the step of retransmission (step S230) is performed as unicast or multicast transmission.

According to the claimed method, as illustrated with dashed box S229 in Fig. 2c, the step of retransmission is selected to be either unicast of multicast in a step S229. Several parameters may be utilized to decide how to make the decision on unicast or multicast transmission. In a first scenario, unicast or multicast transmission is selected based on if there is a stadium installation with native layer 1 or layer 2, "L1/L2", multicast. The retransmission of a packet has the same cost if it is uni- or multicast meaning that if the data is requested more than once, multicast is beneficial. If the multicast uses L1/L2 multicast in at least one region but not between regions multicast transmission is selected. It might be beneficial to use multicast if the request is in the same region but if it is different regions not. In a second scenario, the unicast or multicast decision is based on if a predetermined threshold number of request is received from a multiple of client devices, in which case multicast transmission is selected which is beneficial.

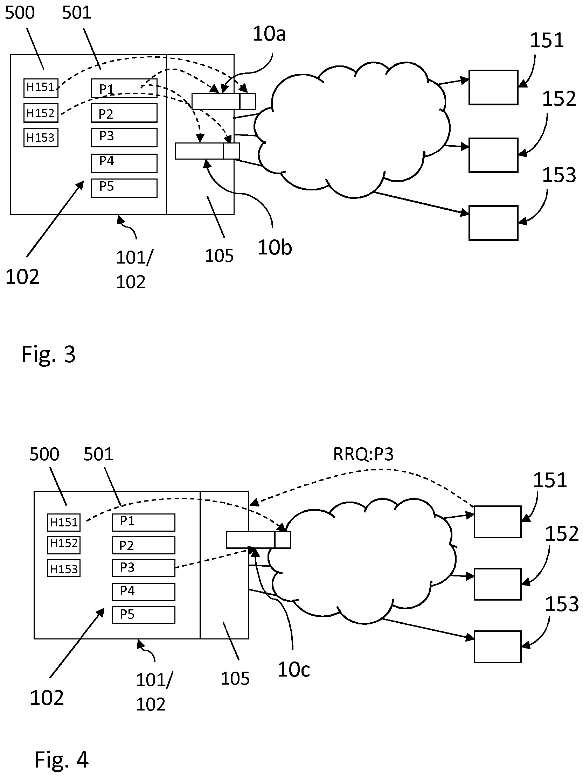

Referring now to Fig. 3, a server 101 (or optionally the dedicated control server 102) as previously described herein further comprises a network interface card (NIC) 105 arranged for communication with a number of client devices, 151 - 153. According to a method of the present inventive concept, client shared data CSD, e.g. payload data P1 - P5 containing media content to be presented in client devices 151 - 153 is buffered in a shared buffer 501 in the server 101 (control device 102).The payload data P1 - P5 in the shared buffer is stored with a, for all client devices, common sequence number. As a client requests a retransmission RRQ the server locates the payload data using the sequence number. The method with one shared buffer for several client devices can thus be used both for unicast and multicast applications. Further, a list of unique header data UHD 500 (here illustrated as H 151, H 152, and H153) is buffered/stored in the server 101 (or alternatively a control server 102). When the data stream DS is distributed to the client devices 151 - 153, CSD and UHD are retrieved from the shared buffer and the list of UHD to the NIC 105 as illustrated by means of dashed arrows in Fig. 3. In the NIC, packets 10a and 10b are constructed and subsequently transferred to the respective client devices 151 and 152. Each of the packets 10a and 10b contain the same payload (P1 in the exemplifying illustration) but their own unique header data, H151 and H152, respectively.

When a client requests a retransmission, as illustrated in Fig. 4, in which a client device 151 sends an RRQ for the missing data P3, RRQ:P3, to the NIC 105 of the server 101/102, UHD H151 is retrieved from the list of unique header data 500, as payload P3 from the shared buffer 501, a packet 10c is constructed containing the UHD H151 and the CSD P3, and the packet is then retransmitted to the client device either as unicast or multicast.

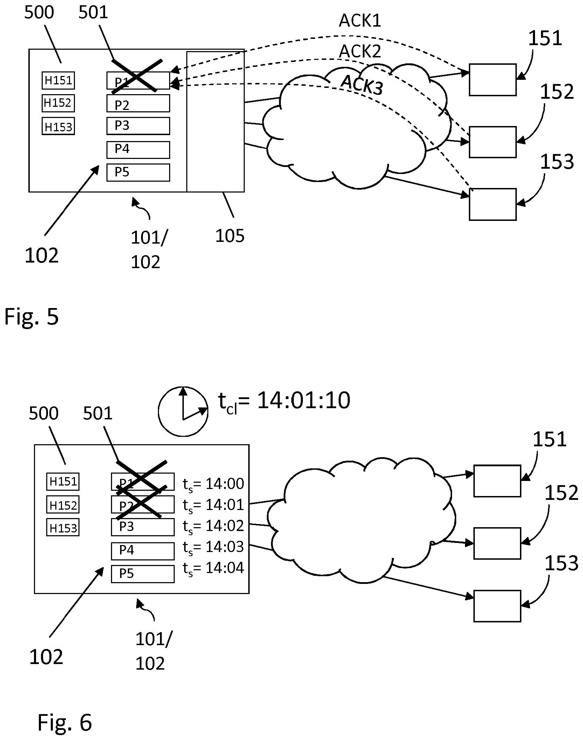

When buffered CDS in the shared buffer 501 is no longer useful, according to an embodiment of the method as illustrated in Figs. 5 and 6, CDS data is discarded. In Fig. 5, acknowledgement signals ACK1, ACK2, ACK3 illustrated with dashed arrows, are sent from each of the client devices, when the payload data P1 is successfully received. Since all client devices have successfully received a specific CDS, it may be discarded from the shared buffer 501, as illustrated with a cross over payload P1. This is preferably combined with a timer or other timing information, like the one described below with reference to Fig. 6, to decide if data is still useful or if it is too old, and thus should be discarded from the shared buffer 501.

In yet another embodiment, as illustrated in Fig. 6, non useful CSD are discarded based on a current time/time stamps tₛ of a local clock t_{cl} of the server 101 or a timer indicating that the time of interest for the buffered data has passed. Buffered data is kept a predetermined time, as long as data is not too old to be valid anymore, particularly in the case of video where the time of presentation of the content of the data stream has passed. In the illustrative example, the time of the local clock t_{cl} =14:01 :10, and any payload with a time stamp tₛ for displaying the media content is too old, and can be discarded from the shared buffer 501.

Although illustrative exemplary implementations have been described herein with reference to the accompanying drawing, it is to be understood that various changes and modifications may be effected therein by one skilled in the art provided that these changes and modifications fall within the scope of the invention which is defined by the appended claims.

## Claims

1. A method for transmitting a data stream (DS) from a server (101) to at least two client devices (151-153) comprising:
• for at least one outgoing data stream (DS):
∘ transmitting (S210) said data stream (DS) to said at least two client devices (151-153); and
∘ buffering (S205) a predetermined portion (CSD) of said data stream (DS) in a shared buffer (102);
• wherein upon receiving (S220) per client requests for retransmission of data (RRQ) from at least one of said at least two client devices (151-153):
∘ retransmitting (S230) requested data from said shared buffer (102),
said method being **characterized in that**:
• when said method is concerned with video distribution using multicast, said step of retransmitting (S230) is performed as unicast or multicast transmission,
• unicast- or multicast transmission is selected (S229) based on if there is a network installation with native layer 1 or layer 2, L1/L2, multicast, and
• said method comprises removing (S240) buffered data (CSD) from said shared buffer (102) based on if a time of interest for the buffered data (CSD) has passed.

2. A method according to claim 1, wherein said step of buffering (S205) is performed on payload data of said data stream (DS) and/or client shared header data.

3. A method according to any preceding claim, wherein said outgoing data stream (DS) is transported using unicast or multicast with individual client requests for retransmissions (RRQ).

4. A method according to claim 1, wherein if said multicast transmission uses L1 /L2 multicast in at least one subnetwork but not between subnetworks, multicast transmission is selected (S229) if there are requests for retransmission from client devices (151-153) connected to the different subnetworks.

5. A method according to claim 1, wherein if a predetermined threshold number of request (RRQ) are received from a multiple of client devices (151-153), multicast transmission is selected (S229).

6. A method according to any preceding claim, wherein payload data is buffered (S205) in a dedicated memory instead of a cache or a primary memory of said server (101).

7. A method according to any preceding claim, further comprising constructing (S209) packets comprising requested data from said shared buffer (102) and per client information selected from a list of header unique destination data.

8. A method according to any preceding claim, wherein said step of removing (S240) buffered data (CSD) is performed based on received acknowledge from all client devices (151-153).

9. A method according to any preceding claim, wherein a timer or time stamps distributed in the data stream (DS) is utilized for deciding if the time of interest of buffered data (CSD) has passed.

10. A node in a communication system arranged for node to node communication, the node comprising: a memory storing computer-readable instructions, and a processor, wherein when the computer-readable instructions are executed by the processor, cause the processor to perform a method according to any preceding claim.

11. A node, according to claim 10, further comprising means for transmitting said outgoing data stream (DS).

12. A non-transitory computer readable storage medium storing computer-readable instructions, wherein when the computer-readable instructions are executed by a processor, cause the processor to perform the method according to any claims 1 - 9.

## Patentansprüche

1. Verfahren zum Übertragen eines Datenstromes (DS) von einem Server (101) an mindestens zwei Client-Geräte (151-153), Folgendes umfassend:
• für mindestens einen ausgehenden Datenstrom (DS):
∘ Übertragen (S210) des Datenstromes (DS) an die mindestens zwei Client-Geräte (151-153) und
∘ Zwischenspeichern (S205) eines festgelegten Teils (CSD) des Datenstromes (DS) in einem gemeinsam genutzten Zwischenspeicher (102),
• wobei auf das Empfangen (S220) pro Client-Anfrage zur erneuten Übertragung von Daten (RRQ) von mindestens einem der mindestens zwei Client-Geräte (151-153) hin:
• erneutes Übertragen (S230) angefragter Daten von dem gemeinsam genutzten Zwischenspeicher (102),
wobei das Verfahren **dadurch gekennzeichnet ist, dass**:
• der Schritt des erneuten Übertragens (S230) als Unicast- oder Multicast-Übertragung durchgeführt wird, wenn das Verfahren Video-Verbreitung mit Hilfe von Multicast betrifft,
• die Unicast- oder Multicast-Übertragung basierend darauf ausgewählt wird (S229), ob eine Netzwerkinstallation mit Native-Layer-1- oder -Layer-2-, L1/L2-, Multicast vorhanden ist, und
• das Verfahren das Entfernen (S240) zwischengespeicherter Daten (CSD) aus dem gemeinsam genutzten Zwischenspeicher (102), basierend darauf, ob eine Zeit von Interesse für die zwischengespeicherten Daten (CSD) verstrichen ist, umfasst.

2. Verfahren nach Anspruch 1, wobei der Schritt des Zwischenspeicherns (S205) an Nutzlastdaten des Datenstroms (DS) und/oder vom Client gemeinsam genutzten Header-Daten durchgeführt wird.

3. Verfahren nach einem vorhergehenden Anspruch, wobei der ausgehende Datenstrom (DS) mit Hilfe von Unicast oder Multicast mit individuellen Client-Anfragen zur erneuten Übertragung (RRQ) transportiert wird.

4. Verfahren nach Anspruch 1, wobei, wenn die Multicast-Übertragung L1/L2-Multicast in mindestens einem Teilnetzwerk, jedoch nicht zwischen Teilnetzwerken verwendet, die Multicast-Übertragung ausgewählt wird (S229), wenn Anfragen zur erneuten Übertragung von Client-Geräten (151-153) vorliegen, die mit den verschiedenen Teilnetzwerken verbunden sind.

5. Verfahren nach Anspruch 1, wobei die Multicast-Übertragung ausgewählt wird (S229), wenn von mehreren Client-Geräten (151-153) eine festgelegte Schwellenwertanzahl von Anfragen (RRQ) empfangen wird.

6. Verfahren nach einem vorhergehenden Anspruch, wobei die Nutzlastdaten in einem zugewiesenen Speicher anstelle eines Cache oder eines primären Speichers des Servers (101) zwischengespeichert werden (S205).

7. Verfahren nach einem vorhergehenden Anspruch, ferner das Erstellen (S209) von Paketen umfassend, die angefragte Daten von dem gemeinsam genutzten Zwischenspeicher (102) und Pro-Client-Information umfassen, die aus einer Liste von für die Header eindeutigen Zieldaten ausgewählt werden.

8. Verfahren nach einem vorhergehenden Anspruch, wobei der Schritt des Entfernens (S240) zwischengespeicherter Daten (CSD) basierend auf einer empfangenen Bestätigung von allen Client-Geräten (151-153) durchgeführt wird.

9. Verfahren nach einem vorhergehenden Anspruch, wobei ein Zeitnehmer oder Zeitstempel, die in dem Datenstrom (DS) verteilt sind, für das Entscheiden verwendet werden, ob die Zeit von Interesse der zwischengespeicherten Daten (CSD) verstrichen ist.

10. Knoten in einem Kommunikationssystem, angeordnet für eine Kommunikation von Knoten zu Knoten, wobei der Knoten Folgendes umfasst: einen Speicher, der computerlesbare Anweisungen speichert, und einen Prozessor, wobei der Prozessor veranlasst wird, ein Verfahren nach einem vorhergehenden Anspruch durchzuführen, wenn die computerlesbaren Anweisungen von dem Prozessor ausgeführt werden.

11. Knoten nach Anspruch 10, ferner Mittel zum Übertragen des ausgehenden Datenstromes (DS) umfassend.

12. Nicht-flüchtiges computerlesbares Speichermedium, das computerausführbare Anweisungen speichert, die einen Prozessor veranlassen, das Verfahren nach einem der Ansprüche 1 bis 9 durchzuführen, wenn die computerlesbaren Anweisungen von dem Prozessor ausgeführt werden.

## Revendications

1. Procédé de transmission d'un flux de données (DS) d'un serveur (101) à au moins deux dispositifs clients (151 -153), comprenant le fait de :
• pour au moins un flux de données sortant (DS) :
∘ transmettre (S210) ledit flux de données (DS) auxdits au moins deux dispositifs clients (151-153) ; et
∘ mettre en mémoire tampon (S205) une partie prédéterminée (CSD) dudit flux de données (DS) dans une mémoire tampon partagée (102) ;
• dans lequel, lors de la réception (S220) de demandes de retransmission de données par client (RRQ) provenant d'au moins un desdits au moins deux dispositifs clients (151-153), le procédé comprend le fait de :
∘ retransmettre (S230) des données demandées à partir de ladite mémoire tampon partagée (102),
ledit procédé étant **caractérisé en ce que** :
• lorsque ledit procédé concerne une distribution vidéo par multidiffusion, ladite étape de retransmission (S230) est mise en œuvre sous la forme d'une transmission par monodiffusion ou par multidiffusion ;
• la transmission par monodiffusion ou par multidiffusion est sélectionnée (S229) sur la base de l'existence ou non d'une installation de réseau avec une multidiffusion de couche 1 ou de couche 2, L1/L2, native ; et
• ledit procédé comprend le fait de retirer (S240) les données mises en mémoire tampon (CSD) de ladite mémoire tampon partagée (102) selon qu'un temps d'intérêt pour les données mises en mémoire tampon (CSD) s'est écoulé ou non.

2. Procédé selon la revendication 1, dans lequel ladite étape de mise en mémoire tampon (S205) est mise en œuvre sur des données de charge utile dudit flux de données (DS) et/ou des données d'en-tête partagées de client.

3. Procédé selon l'une quelconque des revendications précédentes, dans lequel ledit flux de données sortant (DS) est transporté à l'aide d'une monodiffusion ou d'une multidiffusion avec des demandes de retransmissions de clients individuels (RRQ).

4. Procédé selon la revendication 1, dans lequel, si ladite transmission par multidiffusion utilise une multidiffusion de couche L1/L2 dans au moins un sous-réseau, mais pas entre les sous-réseaux, la transmission par multidiffusion est sélectionnée (S229) s'il y a des demandes de retransmission de la part de dispositifs clients (151-153) connectés aux différents sous-réseaux.

5. Procédé selon la revendication 1, dans lequel si un nombre seuil prédéterminé de demandes (RRQ) est reçu en provenance d'une multitude de dispositifs clients (151-153), la transmission par multidiffusion est sélectionnée (S229).

6. Procédé selon l'une quelconque des revendications précédentes, dans lequel des données de charge utile sont mises en mémoire tampon (S205) dans une mémoire dédiée, au lieu d'une mémoire cache ou d'une mémoire primaire dudit serveur (101).

7. Procédé selon l'une quelconque des revendications précédentes, comprenant en outre le fait de construire (S209) des paquets comprenant des données demandées à partir de ladite mémoire tampon partagée (102) et des informations par client sélectionnées dans une liste de données de destination unique d'en-tête.

8. Procédé selon l'une quelconque des revendications précédentes, dans lequel ladite étape de suppression (S240) des données mises en mémoire tampon (CSD) est mise en œuvre sur la base d'un accusé de réception reçu en provenance de tous les dispositifs clients (151-153).

9. Procédé selon l'une quelconque des revendications précédentes, dans lequel un temporisateur ou des horodatages répartis dans le flux de données (DS) est/sont utilisé(s) pour déterminer si le temps d'intérêt des données mises en mémoire tampon (CSD) s'est écoulé.

10. Nœud dans un système de communication agencé pour une communication de nœud à nœud, le nœud comprenant : une mémoire stockant des instructions lisibles par ordinateur, et un processeur, dans lequel lorsque les instructions lisibles par ordinateur sont exécutées par le processeur, elles amènent le processeur à mettre en œuvre un procédé selon l'une quelconque des revendications précédentes.

11. Nœud selon la revendication 10, comprenant en outre des moyens pour transmettre ledit flux de données sortant (DS).

12. Support de stockage non transitoire lisible par ordinateur stockant des instructions lisibles par ordinateur, dans lequel, lorsque les instructions lisibles par ordinateur sont exécutées par un processeur, elles amènent le processeur à mettre en œuvre le procédé selon l'une quelconque des revendications 1 à 9.
